# EUROPÄISCHE PATENTSCHRIFT

(11) **EP 0 530 518 B1**
(45) Veröffentlichungstag und Bekanntmachung des Hinweises auf die Patenterteilung: **01.05.1996**
(21) Anmeldenummer: 92113258.5
(22) Anmeldetag: 04.08.1992
(51) Int. Cl.: F04D 29/04

(54) **Turbomaschine**
Turbo machine
Turbo machine

(30) Priorität: 04.09.1991 CH 2595/91
(43) Veröffentlichungstag der Anmeldung: 10.03.1993
(73) Patentinhaber: Sulzer Turbo AG, CH-8005 Zürich (CH)
(72) Erfinder: Lorenzen, Heinrich, CH-5417 Untersiggenthal (CH)
(74) Vertreter: Hammer, Bruno, Dr.

(56) Entgegenhaltungen:
- EP-A- 0 361 844
- EP-A- 0 373 817
- CH-A- 449 659
- CH-A- 663 447
- DE-A- 3 925 403
- US-A- 4 413 946

## Beschreibung

Die Erfindung betrifft eine Turbomaschine mit einem von einem Gehäuse umschlossenen Rotor mit einer Saugseite und einer Druckseite, sowie einer Welle, die an beiden Seiten mit geeigneten Lagern in einem Gehäuse gelagert und mit Dichtungen zwischen dem Gehäuseinneren und der Umgebung abgedichtet ist, sowie mit einer Anordnung zur Aufnahme des durch die Druckdifferenz zwischen der Saugseite und der Druckseite erzeugten Axialschubes, wobei die saugseitigen und die druckseitigen Dichtungen der Welle als Trockengasdichtungen ausgeführt sind, welche nach aussen gegen jeweils einen saugseitigen und druckseitigen, unter einem Druck po stehenden Lagerraum von als Magnet lager ausgebildeten Wellen-Lagerungen wirken.

Turbomaschinen dieser Art sind aus zahlreichen Publikationen bekannt, beispielsweise aus CH-A-663 447, und können beispielsweise als Turbokompressoren axialer, radialer oder kombinierter Bauart ausgeführt sein, jedoch auch als Turbomaschinen anderer Art, bei denen eine Druckdifferenz zwischen der Saugseite und der Druckseite des Rotors auftritt.

Zufolge der Druckdifferenz zwischen der Saugseite und der Druckseite des Rotors entsteht ein Axialschub. Im günstigsten Fall kann dieser Axialschub von geeigneten Axialschublagern aufgenommen werden. Solche Lager sind zwar in zahlreichen Ausführungsformen bekannt, deren Belastungsfähigkeit ist jedoch begrenzt, insbesondere bei hohen Drehzahlen und grossen Druckdifferenzen.

Es ist daher bereits versucht worden, den Axialschub durch spezielle Anordnungen aufzunehmen oder zumindest zu reduzieren. In der CH-A-449 659 ist eine solche Anordnung beschrieben, bei der der Axialschub durch einen mitrotierenden Druckkamm auf einer mit Zahnradübersetzung angetriebenen Nebenwelle aufgefangen wird. Dies erfordert jedoch eine komplizierte und platzaufwendige Konstruktion.

Bei anderen Anordnungen wird die Druckdifferenz an der Druckseite durch einen Druckausgleichskolben mit einer Labyrinthdichtung abgebaut. Dies bedingt jedoch grosse Leckverluste, insbesondere bei Maschinen mit grossem Druckgefälle und kleiner Fördermenge.

Bei modernen Turbomaschinen, die besonders verlustarme Lager, wie beispielsweise Magnetlager verwenden, sind diese Massnahmen jedoch häufig nicht ausreichend, da Axialschübe hiermit wegen der geringen Schubkapazitäten nur sehr begrenzt aufgenommen werden können. Aus der EP-A-373 817 ist bereits eine Turbomaschine mit magnetgelagertem Rotor bekannt, bei welchem die Laufräder zur Saugseite hin fliegend auf einem Wellenende gelagert sind. In das Gehäuse sind mit dem Wellenende fluchtend zwei konzentrische Rohre eingesetzt, wobei über den Ringraum zwischen den Rohren Sperrgas mit einem dem Saugdruck entsprechenden Sperrdruck auf eine saugseitige Labyrinthdichtung am Wellenende gebracht wird. Das innere Rohr ist mit einer Trockengasdichtung gegen die Stirnseite des Wellenendes abgedichtet, so dass eine Leckagemenge aus dem Ringraum über die Trockengasdichtung auf den Druck im inneren Rohr, der gleichzeitig auf die Stirnfläche der Welle wirkt, entspannt wird.

Durch Drosselung des Sperrgas-Abflusses am Austritt aus dem inneren Rohr kann die Schubkraft auf die Stirnseite eingestellt und Axialschub kompensiert werden. Diese Lösung hat den Nachteil, dass eine saugseitige Lagerung nicht möglich ist und dass daher Maschinen mit grossem Gewicht und einer Vielzahl von Stufen und entsprechender Baulänge von dieser Lösung ausgeschlossen sind. Die verwendete Labyrinthdichtung erlaubt zudem keine grosse Druckdifferenz, bzw. verursacht unerwünschte Leckverluste. Zum einen ist der maximal mögliche Ausgleichsschub durch den an den Saugdruck angeglichenen Sperrdruck und durch die Stirnfläche des saugseitigen Wellenstummels begrenzt. Zum anderen wirkt sich der Rückstau der Leckage im Innenrohr zur Steuerung des Schubausgleichs wegen der Zeitverzögerung im Druckaufbau und wegen der möglichen Streuung der Leckage nachteilig aus, da schnelle Kompensation höchst unsicher ist.

Aus der EP-A-361 844 ist weiterhin eine Turbomaschine mit beidseits mit Magnetlagern gelagertem Rotor bekannt, bei der die Dichtungen zwischen dem Gehäuse-Inneren und der Umgebung bzw. den Lagerräumen als Trockengasdichtungen ausgeführt sind.

Diese Lösung entspricht der klassischen Lösung eines Rotors mit Ausgleichkolben zwischen letzter Druckstufe und Lager, bei der der Dichtungsdurchmesser der inneren Dichtung grösser ausgeführt ist als der der inneren Dichtung auf der Saugseite, um eine Kompensation zu erreichen. Der einzige Unterschied besteht darin, dass die Dichtungen nicht als Labyrinthdichtungen sondern als Trockengasdichtungen ausgeführt sind, die bekanntlich weniger Leckage aufweisen. Durch Verringerung des Aussendrucks auf der inneren druckseitigen Trockengasdichtung kann der Schub, der auf der äusseren "Kolbenringfläche" in Richtung Saugseite wirkt, verringert werden. Dieser Aussendruck muss einerseits an sich schon einiges tiefer als der Enddruck nach der letzten Stufe sein, um einen generellen Schubausgleich zu erreichen, er darf aber auch andererseits nicht zu tief abgesenkt werden, da die zulässige Druckdifferenz an einer Trockengasdichtung begrenzt ist. Bei einer grossen Druckerhöhung über den Kompressor, wie sie bei mehrstufigen Ausführungen vorkommt, läuft man daher in eine Grenze für die Druckabsenkung. Ein Ausweg daraus ist die Vergrösserung der "Kolbenringfläche", was eine Vergrösserung des wirksamen Dichtungsdurchmessers mit allen baulichen Nachteilen und eine Vergrösserung der Umfangsgeschwindigkeit nach sich zieht.

Ebenso ist es - abgesehen von der Baulänge - bei mehreren in Serie mit abnehmenden Durchmessern gegen aussen angeordneten Trockengasdichtungen möglich, die Drücke gegen aussen abzusenken, um eine Korrektur am Schubausgleich zu erreichen. Zu berücksichtigen ist bei einer solchen Lösung, dass der Schubausgleich auch beim Anfahren und bei Teillast funktionieren sollte.

Die Erfindung setzt sich die Aufgabe, die vorstehend angeführten Nachteile des Standes der Technik zu beseitigen und bei einer Turbomaschine mit beidseitig mit Magnet lagern gelagertem Rotor den zufolge der Druckdifferenz zwischen der Saugseite und der Druckseite am Rotor auftretenden Axialschub möglichst weitgehend zu eliminieren, ohne störende Leckverluste, und insbesondere bei Maschinen mit grossem Druckgefälle, hoher Drehzahl und grosser Baulänge mit entsprechendem Gewicht.

Diese Aufgabe wird mit den Kennzeichen des unabhängigen Anspruch 1 gelöst.

Vorteilhaft ist es hierbei, den Druck, der auf die beaufschlagte Fläche wirkt, mittels Axialschubmessung oder Spaltmessung im Magnetlager und einem entsprechenden Regelkreis derart zu regeln, dass der Axialschub auf einen vorgegebenen Wert gehalten wird. Die Regelung kann dabei derart erfolgen, dass der restliche Axialschub praktisch verschwindet, oder eine vorgegebene Schwelle nicht überschreitet.

Besonders vorteilhaft ist es, die Magnetlager mit einer Messeinrichtung zur Bestimmung des Lagerspaltes zu versehen, wobei die Regelanordnung derart ausgebildet sein kann, dass dieser Lagerspalt über den Sperrgas-Druck der weiteren Trockengasdichtung auf einen vorgegebenen Wert geregelt wird.

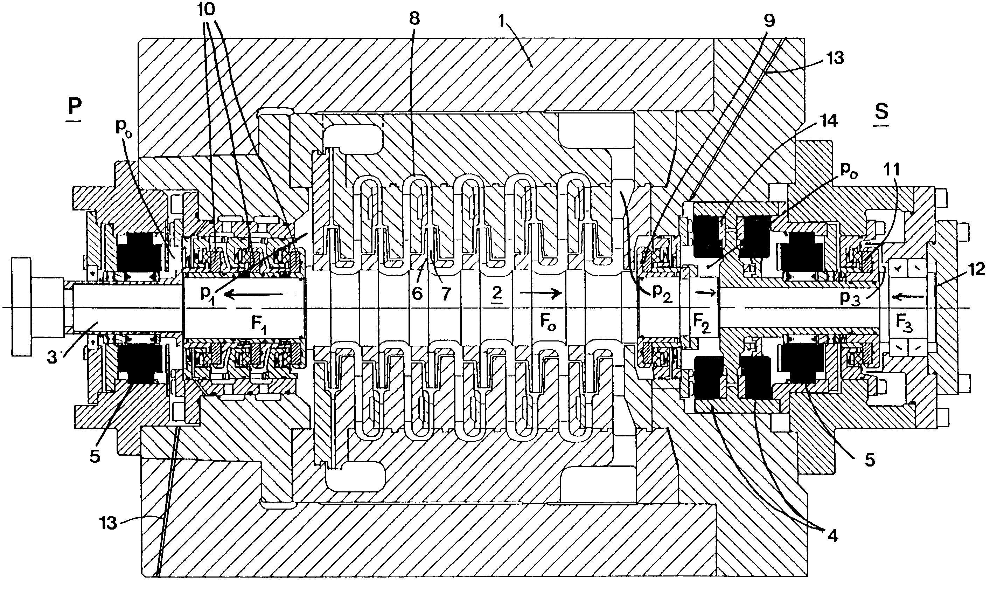

Die Erfindung wird anhand eines in der Figur dargestellten Ausführungsbeispieles der Erfindung näher erläutert.

Die Figur zeigt im Axialschnitt einen sechsstufigen Radialkompressor. Es wird jedoch bemerkt, dass die Erfindung in analoger Weise auch für andere Turbomaschinen mit analogen Vorteilen angewendet werden kann.

Bei dem in der Figur wiedergegebenen Turbokompressor ist in einem Gehäuse 1 ein Rotor 2 angeordnet, welcher eine Welle 3 aufweist, die sowohl an der Saugseite S als auch an der Druckseite P verlustarm mit radialen Magnetlagern 5 und einem axialen Magnetlager 4 im Gehäuse 1 gelagert ist. Dabei ragt das saugseitige Wellenende 12 aus dem Lagerraum des Magnetlagers 4, 5 in einen Gehäuseabschluss hinein, welcher mit einem Sperrgasdruck p3 beaufschlagt ist, wobei das Wellenende 12 im Gehäuseabschluss mit einer radial vorstehenden Schulter versehen ist, an deren Rückseite eine weitere Trockengasdichtung 11 vorgesehen ist, welche gegen den Sperrdruck p3 im Gehäuseabschluss dichtet. Die Welle 3 trägt axial hintereinander sechs Laufräder 6 mit Laufschaufeln 7, die das geförderte Medium, beispielsweise das zu komprimierende Gas, radial nach aussen transportieren, wo es durch Diffusoren 8 im Gehäuse in die nächste Stufe umgeleitet wird. An der Saugseite S ist die Welle 3 mittels einer Trockengasdichtung 9 gegen das Innere des Lagerraumes des Gehäuses 1 abgedichtet. Analog dazu ist die Welle 3 an der Druckseite P der Turbomaschine ebenfalls durch Trockengasdichtungen 10 gegen den anderen Lagerraum des Gehäuses 1 abgedichtet. Wegen des hohen Druckes auf der Druckseite P empfiehlt sich druckseitig die Verwendung einer Mehrfachdichtung, beispielsweise einer dreifachen Trockengasdichtung. Wegen der Konstruktion solcher Dichtungen wird beispielsweise auf DE-A-39 25 403 und weitere Publikationen verwiesen. Diese Dichtungen arbeiten in der Regel zwischen dem Innendruck p1 im Gehäuse an der Druckseite bzw. dem saugseitigen Druck p2 und dem Druck p0 im Lagerraum, der über eine Bohrung 13 mit einem niedrigeren definierten Druck in Verbindung steht, und weisen einen stationären Gleitring auf, der mittels Sperrgas an einen mitrotierenden Dichtring gedrückt wird, unter Bildung eines Spaltes zur berührungslosen Dichtung mit minimaler Leckage.

Infolge der Druckdifferenz zwischen der Saugseite und der Druckseite der Turbomaschine entsteht ein Axialschub F0, und an den beiden Trockengasdichtungen 9 und 10 unterschiedliche Axialschübe F1 und F2, deren Resultante (F0 - F1 + F2) in Axialrichtung zur Saugseite S gerichtet ist und auf die als Magnetlager ausgeführten Wellenlager 4 und 5 einen Axialschub ausübt. Um diesen insbesondere bei Magnetlagern und bei Maschinen grosser Druckdifferenz und hoher Drehzahl unzulässigen Axialschub zu eliminieren oder zumindest auf einen unschädlichen Wert zu reduzieren, ist an der Saugseite S des Rotors an der Stirnseite 12 der Welle 3 eine zusätzliche Trockengasdichtung 11 vorgesehen, und zwar umgekehrt zur Trockengasdichtung 9 derart, dass sie an der Innenseite gegen den Innendruck p0 im Lagerraum arbeitet, während deren Aussenseite mit einem erhöhten Druck p3 beaufschlagt wird. Dieser Druck wirkt auf die zusätzliche Trockengasdichtung 11 und gleichzeitig auf die Stirnseite 12 der Welle 3 und erzeugt einen Gegenschub F3. Dieser wird z.B. mittels Schubmessung oder auf andere Weise mit Vorteil so geregelt, dass er die Resultante des Axialschubes (F0 - F1 + F2) kompensiert oder zumindest auf ein für die Magnetlager zulässigen Wert reduziert.

Durch Verwendung von Trockengasdichtungen lassen sich die Leckverluste besonders gering halten, und zwar auch bei grösseren Druckgefällen. Die Verwendung von Magnetlagern sowohl an der Saugseite als an der Druckseite gestattet dabei eine verlustarme Lagerung auch schwerer Maschinen mit einer Vielzahl von Stufen bei hohen Drehzahlen.

Besonders vorteilhaft ist es, z.B. am axialen Magnetlager 4 oder einem anderen Lager eine Spaltmesseinrichtung 14 vorzusehen, welche über einen Regelkreis die Druckbeaufschlagung p3 an der Stirnseite 12 der Welle 3 derart regelt, dass die Spaltweiten des Magnetlagers innerhalb der vorgegebenen Toleranzen bleiben. Auf diese Weise können die Vorteile verlustarmer Wellenlager voll ausgenützt werden, insbesondere auch bei hohen Drehzahlen der Turbomaschine und bei hohen Druckdifferenzen, ohne dass eine störende Leckage auftritt oder komplizierte Kompensationsanordnungen erforderlich sind.

## Patentansprüche

1. Turbomaschine mit einem von einem Gehäuse (1) umschlossenen Rotor (2) mit einer Saugseite (S) und einer Druckseite (P), sowie einer Welle (3) die an beiden Seiten mit geeigneten Lagern (4, 5) im Gehäuse (1) gelagert und mit Dichtungen (9, 10) gegen das Gehäuse-Innere abgedichtet ist, sowie mit einer Anordnung zur Aufnahme des durch die Druckdifferenz zwischen der Saugseite und der Druckseite erzeugten Axialschubes, wobei die saugseitigen und die druckseitigen Dichtungen (9, 10) der Welle (3) als Trockengasdichtungen ausgeführt sind, welche nach aussen gegen jeweils einen saugseitigen und druckseitigen unter einem Druck (p₀) stehenden Lagerraum von als Magnetlager (4, 5) ausgebildeten Wellen-Lagerungen wirken, dadurch gekennzeichnet, dass das saugseitige Wellenende (12) der Turbomaschine aus dem Lagerraum des Magnetlagers (4, 5) in einen Gehäuseabschluss hineinragt, welcher mit einem Sperrgas-Druck (p₃) beaufschlagt ist, der höher als der Druck (p₀) im Lagerraum des Magnetlagers ist, und dass das Wellenende (12) im Gehäuseabschluss mit einer radial vorstehenden Schulter versehen ist, an deren Rückseite eine weitere Trockengasdichtung (11) vorgesehen ist, welche gegen den Sperrdruck (p₃) im Gehäuseabschluss dichtet, um über die beaufschlagte Stirnseite (12) des Wellenendes einen Axialschub (F3) zu bilden, der den auf den Rotor wirkenden Axialschub weitgehend ausgleicht.

2. Turbomaschine nach Anspruch 1, gekennzeichnet durch einen Regelkreis, der mittels Axialschubmessung den Druck (p3) für die Beaufschlagung der Stirnseite (1) des Wellenendes (12) derart steuert, dass der kompensierende Axialschub (F3) auf einen vorgegebenen Wert geregelt wird.

3. Turbomaschine nach Anspruch 2, dadurch gekennzeichnet, dass der Regelkreis ausgebildet ist, den kompensierende Axialschub (F3) derart zu regeln, dass der Gesamtschub einen vorgegebenen Schwellenwert nicht überschreitet.

4. Turbomaschine nach Anspruch 1, dadurch gekennzeichnet, dass das axiale Magnetlager (4) eine Messeinrichtung zur Messung eines Magnetlagerspaltes aufweist, und dass ein Regelkreis vorgesehen ist, der diesen Lagerspalt über den Druck (p3) für die Beaufschlagung der Stirnseite (11) des Wellenendes auf einen vorgegebenen Wert regelt.

## Claims

1. Turbomachine comprising a rotor (2) surrounded by a housing (1) and having a suction side (S) and a pressure side (P) as well as a shaft (3) which is journalled at both ends with suitable bearings (4, 5) in the housing (1) and is sealed relative to the interior of the housing by seals (9, 10), and also comprising an arrangement for taking up the axial thrust generated by the pressure difference between the suction side and the pressure side, wherein the suction and pressure side seals (9, 10) of the shaft (3) are executed as dry gas seals which act towards the outside against respective suction side and pressure side bearing spaces standing under a pressure (p0) of shaft bearings formed as magnetic bearings (4, 5), characterized in that the suction side shaft end (12) of the turbomachine projects out of the bearing space of the magnetic bearing (4, 5) into a housing closure which is subjected to a blocking gas pressure (p₃) which is greater than the pressure (p₀) in the bearing space of the magnetic bearing; and in that the shaft end (12) in the housing closure is provided with a radially projecting shoulder with a further dry gas seal (11) being provided at the rear side of the shoulder which seals against the blocking pressure (p₃) in the housing closure in order to form an axial thrust (F3) via the loaded end face (12) of the shaft end which largely compensates for the axial thrust acting on the rotor.

2. Turbomachine in accordance with claim 1, characterized by a regulating circuit which, by means of axial thrust measurement, controls the pressure (p₃) which acts on the end face (1) of the shaft end (12) in such a way that the compensating axial thrust (F3) is regulated to a predetermined value.

3. Turbomachine in accordance with claim 2, characterized in that the regulating circuit is designed to regulate the compensating axial thrust (F3) in such a way that the total thrust does not exceed a predetermined threshold value.

4. Turbomachine in accordance with claim 1, characterized in that the axial magnetic bearing (4) has a measuring device for measuring a magnetic bearing gap; and in that a regulating circuit is provided which regulates this bearing gap to a predetermined value via the pressure (p₃) for loading the end face (11) of the shaft end.

## Revendications

1. Turbomachine avec un rotor (2) entouré par un carter (1), avec un côté aspiration (S) et un côté sous pression (P), ainsi qu'avec un arbre (3), qui est monté des deux côtés avec des paliers appropriés (4, 5) dans le carter (1) et dont l'étanchéité est assurée par des garnitures d'étanchéité (9, 10) contre l'intérieur du carter, ainsi qu'avec un agencement servant à recevoir la poussée axiale produite par la différence de pression entre le côté de l'aspiration et le côté sous pression, les garnitures d'étanchéité (9, 10) de l'arbre (3), situées du côté de l'aspiration et situées du côté sous pression étant réalisées sous la forme de garnitures d'étanchéité à gaz secs, qui agissent vers l'extérieur contre respectivement une chambre de paliers d'arbre, constitués sous la forme de paliers magnétiques (4, 5), chambre se trouvant du côté de l'aspiration et du côté sous pression sous une pression (p0), turbomachine caractérisée en ce que l'extrémité de l'arbre (12) de la turbomachine, située du côté de l'aspiration, pénètre à partir de la chambre du palier magnétique (4, 5) dans un carter fermé, qui est alimenté par un gaz d'arrêt sous une pression (p3), qui est supérieure à la pression (p0) dans la chambre du palier magnétique et en ce que l'extrémité de l'arbre (12) dans le carter fermé est pourvue d'un épaulement faisant saillie radialement, épaulement sur le côté arrière duquel on a prévu une autre garniture d'étanchéité à gaz secs (11), qui assure l'étanchéité vis à vis de la pression d'arrêt (p3) dans le carter fermé, pour former sur la face frontale sollicitée (12) de l'extrémité de l'arbre une poussée axiale (F3), qui compense largement la poussée axiale qui s'exerce sur le rotor.

2. Turbomachine selon la revendication 1, caractérisée par un circuit de réglage, qui au moyen de la mesure de la poussée axiale commande la pression (p3) pour l'actionnement de la face frontale (1) de l'extrémité de l'arbre (12) de façon à règler la poussée axiale de compensation (F3) sur une valeur prédéfinie.

3. Turbomachine selon la revendication 2, caractérisée en ce que le circuit de réglage est constitué pour régler la poussée axiale (F3) de compensation d'une manière telle que la poussée totale ne dépasse pas une valeur de seuil prédéfinie.

4. Turbomachine selon la revendication 1, caractérisée en ce que le palier magnétique axial (4) présente un dispositif de mesure servant à mesurer une fente de palier magnétique et en ce que l'on prévoit un circuit de réglage, qui règle cette fente de palier sur une valeur prédéfinie en fonction de la pression (p3) pour l'actionnement de la face frontale (11) de l'extrémité de l'arbre.
